Europäisches Patentamt

European Patent Office

Office européen des brevets

(11) Veröffentlichungsnummer: **0 049 819**
A2

(12) # EUROPÄISCHE PATENTANMELDUNG

(21) Anmeldenummer: 81107765.0

(22) Anmeldetag: 30.09.81

(51) Int. Cl.³: **C 08 J 3/02**
C 09 D 5/02, C 09 D 5/34

(30) Priorität: 01.10.80 DE 3036969

(43) Veröffentlichungstag der Anmeldung:
21.04.82 Patentblatt 82/16

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt/Main 80(DE)

(72) Erfinder: Löhr, Gernot, Dr.
Am Heiligenhaus 9
D-6500 Mainz(DE)

(72) Erfinder: Reinecke, Rolf, Dr.
Fichtestrasse 33
D-6200 Wiesbaden(DE)

(54) Schutzkolloidfreie Kunststoffdispersion mit bimodaler Partikelgrössenverteilung und deren Verwendung.

(57) Eine schutzkolloidfreie Kunststoffdispersion, die nach dem Trocknen einen Polymerfilm ergibt, der unter der Einwirkung von Feuchtigkeit kaum zum Weißanlaufen neigt, enthält Polymerpartikel mit bimodaler Größenverteilung, nämlich einerseits relativ grobteilige und andererseits relativ feinteilige Partikel. Der Polymeranteil besteht zu mindestens 10 Gewichtsprozent aus Partikeln mit einem mittleren Durchmesser von weniger als 0,2 µm und zu höchstens 90 Gewichtsprozent aus Partikeln mit einem mittleren Durchmesser von über 0,25 µm, und das Verhältnis der mittleren Teilchengröße von grobteiligem zu feinteiligem Polymer beträgt mindestens 2:1. Die Kunststoffdispersion eignet sich insbesondere als Bindemitteldispersion in Putzen und in Glanzfarben.

EP 0 049 819 A2

Schutzkolloidfreie Kunststoffdispersion mit bimodaler
Partikelgrößenverteilung und deren Verwendung

Die Erfindung bezieht sich auf eine schutzkolloidfreie Kunststoffdispersion mit bimodaler Partikelgrößenverteilung, die nach dem Trocknen einen Polymerfilm ergibt, welcher unter der Einwirkung von Feuchtigkeit und Nässe nicht oder wenig zum Weißanlaufen neigt, und die Verwendung dieser Dispersion.

Filme aus Kunststoffdispersionen mit einer mittleren Teilchengröße von mehr als 0,2 µm werden milchig oder opak, wenn sie naß oder feucht werden. Dieses "Weißanlaufen" macht sich störend bemerkbar, wenn solche Kunststoffdispersionenals Bindemittel in Putzen verarbeitet werden, die nur grobe und insbesondere grobe bunte Zuschläge enthalten, oder wenn daraus niedrig pigmentierte oder unpigmentierte Überzüge hergestellt werden.

Kunststoffdispersionen mit einer mittleren Teilchengröße von weniger als 0,2 µm, insbesondere weniger als 0,15 µm, zeigen bei sonst gleicher Zusammensetzung dieses Weißanlaufen nicht. Wegen ihrer geringen Scherstabilität kann man daraus aber keinen Putz mit groben Zuschlägen herstellen. Außerdem sind sehr feinteilige Dispersionen bei verarbeitungstechnisch erwünschten Feststoffgehalten zu hochviskos.

Die Erfindung betrifft eine schutzkolloidfreie Kunststoffdispersion mit bimodaler Partikelgrößenverteilung und ist dadurch gekennzeichnet, daß der Kunststoffanteil aus mindestens 10 Gewichtsprozent eines feinteiligen Polymeren mit einer mittleren Teilchengröße unter 0,2 µm und höchstens 90 Gewichtsprozent eines grobteiligen Polymeren mit einer mittleren Teilchengröße über 0,25 µm besteht und daß das Verhältnis der mittleren Teilchengrößen von grobteiligem zu feinteiligem Polymer mindestens 2:1 beträgt.

Die Erfindung betrifft insbesondere eine Kunststoffdispersion der vorgenannten Art, deren Kunststoffanteil aus 60 - 80 Gewichtsprozent eines Polymeren mit einer mittleren Teilchengröße über 0,25 µm und aus 40 - 20 Gewichtsprozent eines Polymeren mit einer mittleren Teilchengröße unter 0,2 µm besteht. Die erfindungsgemäße Kunststoffdispersion ergibt Filme mit erhöhter Lichtdurchlässigkeit. Dieser Effekt ist umso stärker ausgeprägt, je kleiner die mittlere Teilchengröße der feinteiligen Kunststoffdispersion ist, und je größer das Verhältnis der mittleren Teilchengrößen ist.

Man kann die erfindungsgemäße Dispersion am einfachsten durch Mischen erzeugen. Es ist aber ebenso möglich, sie dadurch herzustellen, daß man einen Polymerisationsansatz zunächst nur zu beispielsweise 80 % Umsatz auspolymerisiert und danach durch erneute Zugabe von Initiator wieder startet.

Stellt man die gröber- und die feinerteilige Dispersion getrennt her, so regelt man die mittlere Teilchengröße in bekannter Weise über die Emulgatorkonzentration, wobei höhere Emulgatorkonzentration zu feineren Teilchen führt.

Die disperse Phase der erfindungsgemäßen Dispersion besteht aus Mischpolymerisaten, die aus Styrol und/oder Estern der Acrylsäure oder Methacrylsäure aufgebaut sind, wobei man die Monomeren so auswählt, daß Mischpolymerisate mit ausreichend tiefer Filmbildetemperatur entstehen. Ungesättigte Säuren oder ihre Amide wie Acrylsäure, Methacrylsäure, Acrylamid oder Methacrylamid können in Mengen unter 10 Gewichtsprozent (bezogen auf die Gesamtmonomermenge) mitverwendet werden. Ferner kann das Mischpolymerisat bis zu 5 Gewichtsprozent (bezogen auf die Gesamtmonomermenge) vernetzbare Monomere enthalten, beispielsweise Diallyl- und Diacrylverbindungen, Halogenverbindungen wie Vinylchloracetat, Epoxidverbindungen wie Glycidylacrylat oder -methacrylat und Hydroxyverbindungen wie 2-Hydroxyethylacrylat oder -methacrylat.

Die Herstellung der erfindungsgemäßen bimodalen Dispersion erfolgt in bekannter Weise durch Polymerisation der Monomeren in wäßriger Emulsion in Abwesenheit von Schutzkolloiden und in Gegenwart eines wasserlöslichen Initiatorsystems und ionischer und nichtionischer Emulgatoren, wobei die mittlere Teilchengröße durch die Emulgatorkonzentration in der Startphase eingestellt wird. Einsetzbar sind hierbei die üblichen bekannten ionischen Emulgatoren auf Basis sulfatierter, neutralisierter, gegebenenfalls mit Ethylenoxid veretherter Alkanole oder Phenole oder sulfatiertes und neutralisiertes Polyethylen- oder Polypropylenoxid sowie aromatische oder aliphatische, neutralisierte Sulfonsäuren oder Carbonsäuren. Die Menge dieser Emulgatoren beträgt 0,5 - 10 Gewichtsprozent, vorzugsweise 1 - 5 Gewichtsprozent (bezogen auf die Summe der Monomeren).

Zusätzlich können noch nichtionische Emulgatoren auf Basis ethoxylierter aliphatischer oder aromatischer Alkohole und Phenole sowie Polyethylen- und Polypropylenoxid, das gegebenenfalls ethoxyliert ist, verwendet werden. Wenn diese nichtionischen Emulgatoren eingesetzt werden, sollen sie in einer Menge von 0,5 - 5 Gewichtsprozent eingesetzt werden (bezogen auf die Summe der Monomeren).

Als Initiatorsystem werden bevorzugt wasserlösliche Perverbindungen eingesetzt, die je nach Polymerisationstemperatur mit einer reduzierenden Verbindung kombiniert werden können; in diesen Fällen kann auch eine wasserunlösliche Perverbindung eingesetzt werden. Die Perverbindungen werden in Mengen von 0,01 - 2, bevorzugt 0,05 - 1 Gewichtsprozent eingesetzt (bezogen auf die Summe der Monomeren).

Die Polymerisationstemperatur beträgt 0 - 100°C, bevorzugt 30 - 80°C. Der Feststoffanteil der Dispersionen beträgt 30 - 70 Gewichtsprozent, vorzugsweise 45 - 60 Gewichtsprozent.

Die erfindungsgemäße Kunststoffdispersion mit einer bimodalen Teilchengrößenverteilung zeichnet sich durch ein gegenüber der grobteiligen Dispersion allein verbessertes Weißanlaufverhalten aus, d.h. bei einer Wasserlagerung werden höhere Lichtdurchlässigkeitswerte erreicht. Sie eignet sich besonders als Bindemittel in Putzen und Farben.

Herstellung von grobteiligen und feinteiligen Dispersionen (Prozentangaben beziehen sich auf das Gewicht)

1. Grobteilige Dispersionen

Zunächst wird eine Voremulsion hergestellt aus 250 g Wasser, 28 g einer 50-%igen wäßrigen Lösung des Natriumsalzes eines oxethylierten und sulfatierten Tri-t-butylphenols ( 7 - 8 Mol EO/Mol), 350 g Styrol, 350 g Butylacrylat, 7 g Acrylsäure und 14 g Methacrylsäure.

In einem 2-1-Dreihalskolben mit Rührer, Rückflußkühler, Thermometer und Zulaufeinrichtungen für die Initiatorlösung und die Voremulsion werden 100 g Wasser vorgelegt. Dazu wird soviel Voremulsion gegeben, daß die in Tabelle 1 angegebenen Emulgatorkonzentrationen erreicht werden. Nach dem Aufheizen auf 80°C werden 0,8 g Ammoniumpersulfat in 20 g Wasser zugesetzt, und nach 20 Minuten beginnt man die Voremulsion so schnell zuzudosieren, daß die Dosierung nach 4 Stunden beendet ist. Parallel dazu fügt man 1,2 g Ammoniumsulfat in 90 g Wasser zu. Wenn die Dosierung der Monomerenemulsion beendet ist, gibt man 1 g Ammoniumpersulfat in 10 g Wasser zu, polymerisiert 2 Stunden nach und kühlt ab. Man stellt die Dispersion mit 10prozentiger wäßriger Natronlauge auf pH 8.

Tabelle 1

Grobteilige Dispersionen, Feststoffgehalt 60 %

| Dispersion | Emulgatorkonzentration in der Vorlage (g/l) | mittlere Teilchengröße des Mischpolymerisats (µm) |
|---|---|---|
| A | 0,2 | 0,418 |
| B | 0,5 | 0,332 |
| C | 0,65 | 0,287 |
| D* | 0,15 | 0,375 |

\* = Bei Dispersion D ist Styrol durch Methylmethacrylat ersetzt.

2. Feinteilige Dispersionen

Es wird wie unter 1. verfahren mit folgenden Änderungen:
Bei Dispersion E bis G und I besteht die Vorlage aus 250 g Wasser, 0,5 g Emulgator und soviel Voremulsion, daß die in Tabelle 2 angegebenen Emulgatorkonzentrationen erreicht werden. Die Voremulsion wird mit 340 g Wasser statt mit 250 g angesetzt. Bei Dispersion I ist das Styrol durch Methylmethacrylat ersetzt.

Bei Dispersion H werden 150 g Wasser, 0,5 g Emulgator und soviel Voremulsion vorgelegt, daß die Emulgatorkonzentration in der Vorlage 20 g/l beträgt. Die Voremulsion wird mit 1 400 g Wasser angesetzt.

Tabelle 2

| Dispersion | Emulgatorkonzentration in der Vorlage (g/l) | mittlere Teilchengröße des Mischpolymerisats (µm) |
|---|---|---|
| E | 1,4 | 0,152 |
| F | 1,2 | 0,175 |
| G | 0,8 | 0,12 |
| H | 30 | 0,07 |
| I | 20 | 0,083 |

Erfindungsgemäße Mischungen

Alle Dispersionen werden auf 50 % Feststoffgehalt eingestellt und anschließend wie in Tabelle 3 angegeben gemischt. Auf Glasplatten wird ein 300 µm dicker Film aufgerakelt, der bei 40°C 2 Stunden getrocknet wird. Anschließend wird die Lichtdurchlässigkeit des Films nach 30 Minuten Wasserlagerung bestimmt (Meßapparatur: Dr. Lange Photometer, Universal Meßeinheit UME 3, Meßkopf LMG 035, Filter BG 12, Servocor 201).

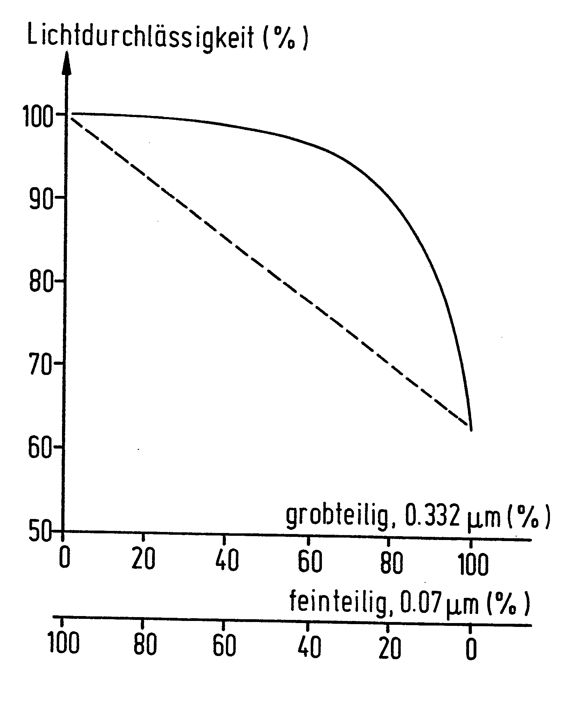

In Figur 1 ist der Einfluß steigender Gehalte an feinteiliger Dispersion in Mischungen der Dispersionen B und H auf die Lichtdurchlässigkeit der aus den Mischungen hergestellten Filme graphisch dargestellt. Die gestrichelte Linie zeigt die erwarteten, die durchgezogene die gefundenen Werte. Aus der graphischen Darstellung ist ersichtlich, daß bereits bei einem Gewichtsanteil von 10 % der feinteiligen Dispersion ein unerwarteter synergistischer Effekt auftritt.

Die Beispiele 1 bis 10 der Tabelle 3 sind erfindungsgemäße Kunststoffdispersionen, hergestellt durch Vermischen
von feinteiligen Dispersionen mit grobteiligen Dispersionen.
Die Ergebnisse der Lichtdurchlässigkeitsprüfung der Ausgangsdispersionen und der erfindungsgemäßen Dispersionsgemische sind ebenfalls in Tabelle 3 zusammengestellt.
Dabei ist eine Erhöhung der Lichtdurchlässigkeit gleichbedeutend mit geringerem Weißanlaufen.

Tabelle 3

| Beispiel | Dispersion | Teilchengrößenverhältnis grob / fein | Lichtdurchlässigkeit (%) |
|---|---|---|---|
| | E | − | 98,6 |
| | F | − | 96,8 |
| | G | − | 99,5 |
| | H | − | 99,8 |
| | I | − | 99,9 |
| | A | − | 45 |
| 1 | A + 20 % E | 2,7 : 1 | 68,2 |
| 2 | A + 20 % F | 2,4 : 1 | 64,1 |
| 3 | A + 20 % G | 3,5 : 1 | 73,7 |
| 4 | A + 20 % H | 6 : 1 | 80,3 |
| | B | − | 62,9 |
| 5 | B + 20 % E | 2,1 : 1 | 74,9 |
| 6 | B + 20 % G | 2,8 : 1 | 84,3 |
| 7 | B + 20 % H | 4,7 : 1 | 90,5 |
| | C | − | 79,9 |
| 8 | C + 20 % G | 2,4 : 1 | 88,5 |
| 9 | C + 20 % H | 4,1 : 1 | 91,7 |
| | D | − | 71,2 |
| 10 | D + 17,0 % I | 4,5 : 1 | 91,4 |

**0049819**

PATENTANSPRÜCHE:

1. Schutzkolloidfreie Kunststoffdispersion mit bimodaler Partikelgrößenverteilung, dadurch gekennzeichnet, daß der Kunststoffanteil aus mindestens 10 Gewichtsprozent eines feinteiligen Polymeren mit einer mittleren Teilchengröße unter 0,2 µm und höchstens 90 Gewichtsprozent eines grobteiligen Polymeren mit einer mittleren Teilchengröße über 0,25 µm besteht und daß das Verhältnis der mittleren Teilchengrößen von grobteiligem zu feinteiligem Polymer mindestens 2:1 beträgt.

2. Kunststoffdispersion nach Anspruch 1, dadurch gekennzeichnet, daß der Kunststoffanteil aus 60 - 80 Gewichtsprozent eines Polymeren mit einer mittleren Teilchengröße über 0,25 µm und aus 40 - 20 Gewichtsprozent eines Polymeren mit einer mittleren Teilchengröße unter 0,2 µm besteht.

3. Verwendung der Kunststoffdispersion nach Anspruch 1 oder 2 als Bindemitteldispersion in kunststoffgebundenen Putzen und in Glanzfarben.

4. Verwendung der Kunststoffdispersion nach Anspruch 1 oder 2 zum Herstellen von unpigmentierten Überzügen.

0049819